# FASCICULE DE BREVET EUROPEEN

(11) **EP 4 203 559 B1**
(45) Date de publication et mention de la délivrance du brevet: **10.09.2025**
(21) Numéro de dépôt: 22215812.3
(22) Date de dépôt: 22.12.2022
(51) Int. Cl.: H04W 36/06, H04W 36/20, H04W 36/38

(54) **PROCÉDÉ DE RECONFIGURATION D'UNE INFRASTRUCTURE DE RADIOCOMMUNICATION EN CAS DE PARASITAGE ET INFRASTRUCTURE DE RADIOCOMMUNICATION ASSOCIÉE**
VERFAHREN ZUR REKONFIGURATION EINER FUNKKOMMUNIKATIONSINFRASTRUKTUR BEI FUNKSTÖRERN SOWIE ENTSPRECHENDE FUNKKOMMUNIKATIONSINFRASTRUKTUR
METHOD FOR RECONFIGURING A RADIOCOMMUNICATION INFRASTRUCTURE IN CASE OF PARASITICS AND ASSOCIATED RADIOCOMMUNICATION INFRASTRUCTURE

(30) Priorité: 23.12.2021 FR 2114390
(43) Date de publication de la demande: 28.06.2023
(73) Titulaire: THALES, 92400 Courbevoie (FR)
(72) Inventeur: CAPDEVIELLE, Véronique, 92622 GENNEVILLIERS CEDEX (FR); KHALIFE, Hicham, 92622 GENNEVILLIERS CEDEX (FR); CONAN, Vania, 92622 GENNEVILLIERS CEDEX (FR); SCHOLLER, Franck, 92622 GENNEVILLIERS CEDEX (FR)
(74) Mandataire: Lavoix

(56) Documents cités:
- WO-A1-2020/156503
- WO-A2-96/08940
- US-A- 6 047 188
- US-A1- 2017 238 226

## Description

La présente invention a pour domaine celui des réseaux de communication radio en situation de parasitage fréquentiel.

Lorsque la bande de fréquence sur laquelle est établie une liaison de communication entre un terminal utilisateur et une station de base d'un réseau de communication radio est parasitée, la qualité de la communication sur cette liaison est dégradée. Par parasitage, on entend toute interférence non-contrôlée par le réseau de communication radio. Cela peut conduire, dans des cas extrêmes, à l'interruption de la communication en cours.

Le document US 2017/238226 A1 divulgue le basculement progressif (« progressive toggling ») des communications entre des équipements utilisateurs et une station de base d'un réseau de radiocommunication. Alors que les communications s'effectuent sur une première bande de fréquence, si des interférences sont détectées, les communications sont progressivement basculées sur une seconde bande de fréquence.

Le document US 6 047 188 A) divulgue une infrastructure de radiocommunication équipée d'un appareil de commutation commun à plusieurs stations de base. Pour éviter les instabilités, tant qu'une station de base n'a pas finalisé son basculement vers une nouvelle fréquence de travail, l'appareil bloque les demandes de basculement des autres stations de base.

Le document US 2002 038970 A1 décrit les différents blocs PDCP, RLC, MAC, PHI d'une chaine radio. Ces blocs seront définis ci-après.

Selon l'état de la technique, la protection contre le parasitage peut s'effectuer par des techniques de traitement du signal implémentées au niveau de la couche physique, du type « évasion de fréquence », par exemple saut de fréquence. La fréquence du lien radio entre la station de base et un équipement utilisateur UE est modifiée selon une séquence prédéfinie de sauts fréquentiels.

Par ailleurs, on connaît un mécanisme, prévu par la norme 3GPP et dénommée double connectivité - DC ( « dual connectivity » en anglais), selon lequel un équipement utilisateur, alors qu'il a établi une première liaison avec une première station de base, dite station maître, établit simultanément une seconde liaison avec une seconde station de base, dite station secondaire, différente de la première station de base. Cela permet d'émettre et de recevoir via la station maître et/ou via la station secondaire. Par exemple, si la station maître est une station 5G et la station secondaire une station 4G, des paquets peuvent être acheminés en 4G via la liaison avec la station secondaire et d'autres paquets en 5G via la liaison avec la station maître, selon les disponibilités des ressources sur l'un autre des chemins. Ce mécanisme est par exemple défini dans le document TR 37.716 du 3GPP pour la 5G.

Le but de la présente invention est de résoudre le problème de la protection du parasitage de manière alternative, en s'appuyant avantageusement sur le mécanisme de double connectivité - DC.

Pour cela l'invention a pour objet un procédé de reconfiguration d'une infrastructure de radiocommunication en cas de parasitage et une infrastructure de radiocommunication conforme aux revendications annexées.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
[Fig 1] La figure 1 est une représentation schématique d'un mode de réalisation préféré de l'infrastructure
[Fig 2] La figure 2 est une représentation sous forme de blocs d'un mode de réalisation d'une station de base de l'infrastructure de la figure 1 ; et,
[Fig 3] La figure 3 est une représentation d'un séquencement des étapes d'un mode de réalisation du procédé selon l'invention mis en œuvre par l'infrastructure de la figure 1. Structure

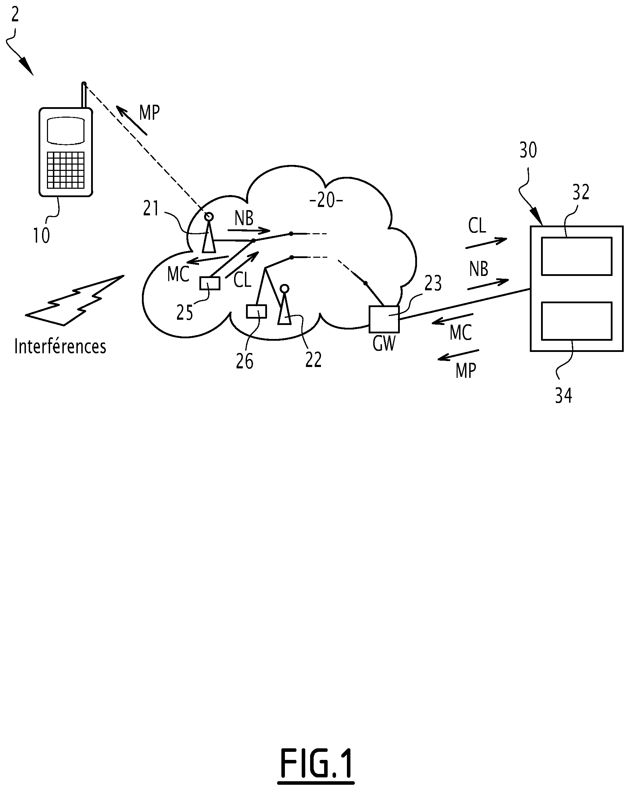

Un mode de réalisation préféré de l'infrastructure de communication radio est représenté sur la figure 1. L'infrastructure 2 comporte :
- un réseau de communication radio 20 ;
- un terminal utilisateur 10 ;
- un serveur d'orchestration 30.

Le réseau de communication radio 20 comporte une pluralité de stations de base, telles que les stations de base 21 et 22. Il comporte, associé à chaque station de base, un scanner de fréquence, tels que les scanners 25 (associé à la station de base 21) et 26 (associé à la station de base 22). Il comporte également une passerelle GW 23 pour la communication du réseau 20 vers le serveur d'orchestration 30.

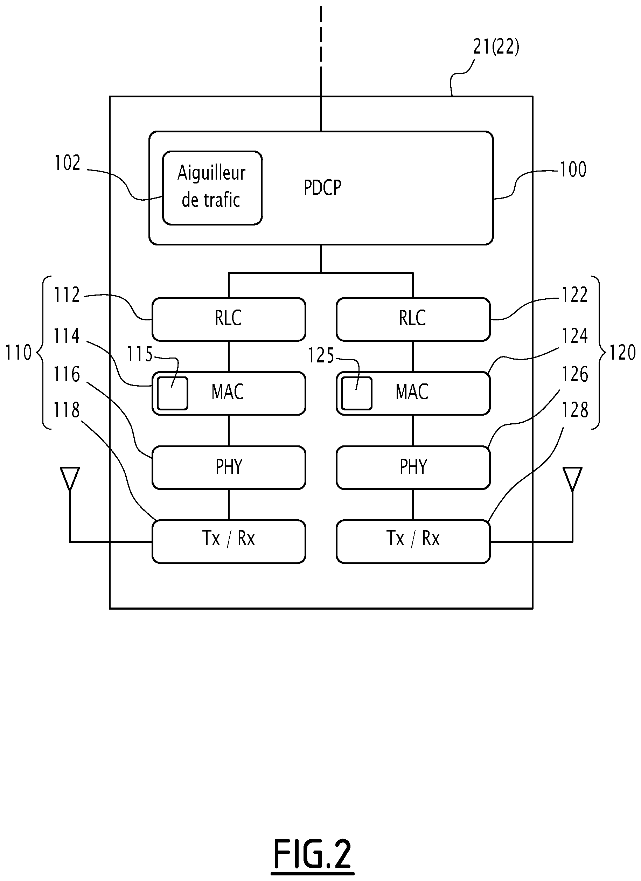

En se référant à la figure 2, une station de base, comme la station 21, comporte :
- un bloc 100 de protocole de convergence de paquets de données - PDCP (« Packet Data Convergence Protocol ») ;
- une première chaîne radio 110, comportant un premier bloc de contrôle du lien radio - RLC (« Radio Link Control ») 112, un premier bloc de contrôle d'accès au media - MAC (« Medium Access Control ») 114, un premier bloc d'accès à la couche physique - PHY (« PHYsical layer » ) 116 (en suivant une décomposition selon les couches basses du modèle OSI), ainsi que des moyens matériels d'émission/réception 118 ; et,
- une seconde chaîne radio 120, comportant un second bloc RLC 122, un second bloc MAC 124, un second bloc PHY 126, ainsi que des moyens matériels d'émission/réception 128.

Le bloc PDCP 100 réalise les fonctionnalités classiques de la couche PDCP selon la norme 3GPP mise en œuvre par le réseau de communication radio 20. Par exemple, dans la pile de protocoles radio LTE, la couche PDCP est située au-dessus d'une couche RLC et au-dessous d'une couche IP (pour le plan utilisateur) et d'une couche RRC (pour le plan de contrôle). La couche PDCP est bidirectionnelle, fonctionnant en émission et en réception. La principale fonction de la couche PDCP est, en émission, la compression de l'en-tête des paquets IP en supprimant les en-têtes redondants d'un paquet à l'autre, et, en réception, en reconstruisant les en-têtes complets pour la couche IP. La couche PDCP peut également réaliser une fonction de sécurité.

Dans le mode de réalisation présenté ici en détail, le bloc PDCP est commun aux deux chaînes radio. En variante, chaque chaine pourrait comporter un bloc PDCP.

Selon l'invention, le bloc PDCP 100 comporte un module d'aiguillage 102, capable d'aiguiller de trafic descendant (plan de contrôle et plan utilisateur) vers la première chaîne radio 110 ou vers la seconde chaîne radio 120. Il est à noter que, dans une implémentation possible du mécanisme de double connectivité - DC, le bloc PDCP de la station maître comporte un tel module aiguilleur de trafic pour transmettre les paquets soit vers la chaîne radio de la station maître, soit vers la chaine radio de la station secondaire.

Dans un mode de fonctionnement nominal de l'infrastructure, le module d'aiguillage 102 achemine le trafic vers une chaîne principale, sélectionnée parmi les première et seconde chaînes radio, 110, 120, l'autre chaîne étant alors considérée comme une chaîne auxiliaire.

Lors de détection d'un parasitage, l'infrastructure bascule dans un mode de fonctionnement parasité.

Le module d'aiguillage 102 est alors commandé par la réception d'une notification de parasitage NP reçue de la première chaîne 110 ou de la seconde chaîne 120 pour orienter le trafic de la chaîne principale vers la chaîne auxiliaire.

Lorsque la notification de parasitage provient de la première chaîne 110, NP1, le module d'aiguillage 102 est propre à orienter le trafic de la première chaîne 110 utilisée jusqu'à l'instant de réception de la notification de parasitage comme chaîne radio principale vers la seconde chaîne 120 utilisée jusqu'à cet instant comme chaîne radio auxiliaire. La seconde chaîne 120 est alors promue chaîne radio principale, tandis que la première chaîne 110 est dégradée en chaîne auxiliaire.

Lorsque la notification de parasitage provient de la seconde chaîne 120, NP2, le module d'aiguillage 102 est propre à orienter le trafic de la seconde chaîne 120 utilisée jusqu'à l'instant de réception de la notification de parasitage comme chaîne radio principale, vers la première chaîne 110 utilisée jusqu'à cet instant comme chaîne radio auxiliaire. La première chaîne 110 est alors promue chaîne radio principale, tandis que la seconde chaîne 120 est dégradée en chaîne auxiliaire.

Lors de la réorientation du trafic de la chaîne radio principale à la chaîne radio auxiliaire, le module d'aiguillage102 est propre à transmettre une notification de basculement MB au serveur d'orchestration 30 indiquant une modification de l'attribution du rôle de chaîne principale d'une chaîne à l'autre.

La première chaîne 110 est capable de fonctionner sur une première bande de fréquence sélectionnée parmi un ensemble de bandes de fréquence possibles. L'ensemble de bandes de fréquence possibles est inclus dans le spectre de fréquence de la technologie de radiocommunication mis en œuvre par le réseau 20. Cet ensemble dépend des bandes de fréquence dont l'opérateur du réseau 20 est propriétaire.

La première chaîne radio 110 est reconfigurable en fréquence.

Par exemple, la reconfiguration de la première chaîne radio 110 afin qu'elle opère dans une première bande de fréquence nouvellement sélectionnée consiste à éteindre la première chaîne 110, à instancier les caractéristiques de la première bande de fréquence nouvellement sélectionnée, et à rallumer la première chaîne 110 de manière à ce que les différents blocs de celle-ci fonctionnent dans la première bande de fréquence nouvellement sélectée. En variante, il existe des mécanismes de reconfiguration qui ne nécessitent pas d'éteindre la chaîne radio, fondés par exemple sur un sélecteur de la bande de fréquence de la chaîne radio.

Le premier bloc RLC 112 réalise les fonctionnalités classiques de la couche RLC selon la norme 3GPP. Les principales fonctions de la couche RLC sont la segmentation et le réassemblage des paquets de la couche PDCP afin de les adapter à la taille qui peut être effectivement transmise sur l'interface radio. En outre, la couche RLC procède à un réordonnancement pour compenser la réception en désordre des données par les couches inférieures.

Le premier bloc MAC 114, réalise les fonctionnalités classiques de la couche MAC selon la norme 3GPP. En émission, la couche MAC encapsule les trames de données fournies par la couche RLC dans des trames appropriées au support de transmission, ajoute une séquence de contrôle de trame pour identifier les erreurs de transmission, et transmet les données à la couche PHY. La couche MAC permet de contrôler quand les données sont envoyées à la couche PHY pour éviter les collisions. La couche MAC permet de compenser les collisions en initiant une retransmission des données. En réception, la couche MAC garantit l'intégrité des données en vérifiant les séquences de contrôle de trame et en supprimant le préambule et le remplissage avant de transmettre les données à la couche RLC.

Le premier bloc PHY 116 réalise les fonctionnalités classiques de la couche PHY selon la norme 3GPP. En émission, la couche PHY définit le moyen de transmettre un flux de bits sous la forme d'un signal qui sera émis par les premiers moyens matériels 118 vers un terminal utilisateur. Elle effectue un travail inverse en réception sur le signal reçu d'un terminal utilisateur

Selon l'invention, la première chaîne 110, de préférence le premier bloc MAC 114, est modifiée de manière à comporter un premier module de détection de parasitage 115. Ce premier module 115 est capable de détecter le parasitage sur la première bande de fréquence utilisée à l'instant courant par la première chaîne radio 110.

Par exemple, alors qu'une liaison de communication est établie entre la station de base et un terminal utilisateur, via la première chaîne radio 110, une analyse en continu des mesures radio par le premier module 115 (rapport des mesures réalisées par le terminal utilisateur sur le lien descendant puis transmis à la première chaîne radio de la station de base et/ou rapport des mesures réalisées par la première chaîne radio sur le lien montant) permet de détecter une anomalie caractérisée par exemple par une chute brutale des performances. Avantageusement, une analyse complémentaire peut être réalisée pour déterminer les causes d'une anomalie détectée afin de confirmer qu'il s'agit bien d'une situation de parasitage et non pas d'une défaillance technique par exemple d'un composant de la station de base.

En cas de détection d'un parasitage sur la première bande de fréquence, le premier module 115 est capable de générer une première notification de parasitage, NP1, et de la transmettre au module d'aiguillage 102.

La seconde chaîne 120 est similaire à la première chaîne 110, à l'exception du fait qu'elle est capable de fonctionner sur une seconde bande de fréquence. Comme la première bande de fréquence, la seconde bande de fréquence est sélectionnée dans l'ensemble de bandes de fréquence possibles. Cependant, à tout instant de fonctionnement, la seconde bande de fréquence sélectionnée pour la seconde chaîne 120 est différente de la première bande sélectionnée pour la première chaîne 110, de sorte que, lorsqu'une une bande de fréquence est parasitée, l'autre bande de fréquence constitue une solution de repli permettant de poursuivre la communication en cours entre un terminal mobile et la station de base.

Par exemple, la reconfiguration de la seconde chaîne radio 120 pour qu'elle opère dans une seconde bande de fréquence nouvellement sélectionnée consiste à éteindre la seconde chaîne 120, à instancier les caractéristiques de la seconde bande de fréquence nouvellement sélectée, et à rallumer la seconde chaîne radio 120 de manière à ce que ses différents blocs fonctionnent dans la seconde bande de fréquence nouvellement sélectée.

Selon l'invention, la seconde chaîne 120, de préférence le second bloc MAC 124 de la seconde chaîne, est modifiée pour comporter un second module de détection de parasitage 125. Ce second module 125 est capable de détecter les parasitages sur la seconde bande de fréquence utilisée à l'instant courant par la seconde chaîne 120. En cas de détection d'un parasitage, le second module 125 est capable de générer une seconde notification de parasitage, NP2, et de la transmettre au module d'aiguillage 102.

Un scanner de fréquence, tel que le scanner 25 ou le scanner 26, est propre à scanner les bandes de fréquence du spectre de fréquence ou, tout au moins, l'ensemble des bandes de fréquence possibles du spectre de fréquence, qui sont les bandes de fréquence sélectionnables par les première et seconde chaînes radio 110 et 120, de la station de base associée. Un scanner est capable d'effectuer des mesures de puissance reçue par bande fréquentielle dans le spectre de fréquence afin d'identifier les bandes de fréquence qui sont, à l'instant considéré, libres ou peu utilisées dans la zone de couverture de la station de base associée. Un scanner est capable de transmettre régulièrement (ou sur demande du serveur d'orchestration à la suite de la réception d'une notification de basculement) une cartographie des bandes de fréquence libres CL au serveur d'orchestration 30.

Le système d'orchestration 30 met en œuvre un module de planification fréquentielle 32, pour assurer, suite à la réception d'une notification de basculement NB provenant d'une station de base, la reconfiguration d'une chaîne radio parasitée de cette station de base. Le module de planification fréquentielle détermine les choix fréquentiels à appliquer sur la chaîne radio parasitée, qui est à cet instant la chaîne auxiliaire de la station de base, de manière à ce qu'il soit ultérieurement possible de basculer le trafic sur cette chaîne auxiliaire en cas de parasitage de la chaîne radio principale. Dans le mode de réalisation préféré, le module 32 prend en compte les mesures réalisées par le scanner de fréquence associé à la station de base considérée et éventuellement d'autres critères, tels que par exemple : les contraintes radio sur les antennes de la chaîne radio auxiliaire, les exigences de qualité d'expérience - QoE (« Quality of Experience ») pouvant nécessiter plus ou moins de bande passante, les bandes de fréquence de fonctionnement des stations de base voisines de la station de base considérée pour éviter l'interférence entre cellules voisines, etc. La sélection d'une nouvelle bande de fréquence est transmise, dans un message de configuration MC, du module de planification fréquentielle vers la station de base 21 dont le serveur d'orchestration 30 a le contrôle, pour reconfiguration de la chaîne radio auxiliaire.

De plus, le système d'orchestration 30 met en œuvre un module de basculement 34 capable de générer et d'émettre un message de provisionnement MP à destination du terminal mobile connecté à la station de base via la chaîne radio principale, afin de lui fournir les informations relatives à la chaîne radio auxiliaire, notamment la nouvelle configuration fréquentielle allouée dynamiquement à la chaîne radio auxiliaire.

De préférence, la communication entre le serveur d'orchestration 30 et le terminal utilisateur 10 s'effectue sur l'interface standardisée S14 du plan de contrôle de la liaison entre la station de base et le terminal utilisateur. L'interface S14 est une interface normalisée de la technologie 3GPP dont relève le réseau de radiocommunication 20, qui est normalement utilisée comme interface de communication entre l'équipement utilisateur - UE et l'entité « Fonction de découverte et sélection du réseau d'accès » - ANDSF (« Access network discovery and selection function »). Ainsi, selon l'invention, l'interface S14 est utilisée d'une manière différente de celle préconisée par le standard.

Le terminal utilisateur mémorise les informations relatives à la chaîne auxiliaire. Ainsi, en cas de brouillage de la chaîne principale nécessitant un arrêt de celle-ci et donc une perte de la liaison en cours, le terminal utilisateur cherche d'abord à établir une nouvelle liaison avec la chaîne auxiliaire. Connaissant les caractéristiques radio de cette dernière, notamment la bande de fréquence de fonctionnement de la chaîne auxiliaire, le terminal utilisateur n'a pas à scanner l'intégralité du spectre à la recherche d'une bande de fréquence disponible. Il y a donc, en communication montante, un basculement immédiat du trafic de la chaîne radio principale parasitée vers la chaîne auxiliaire non-parasitée.

### Fonctionnement

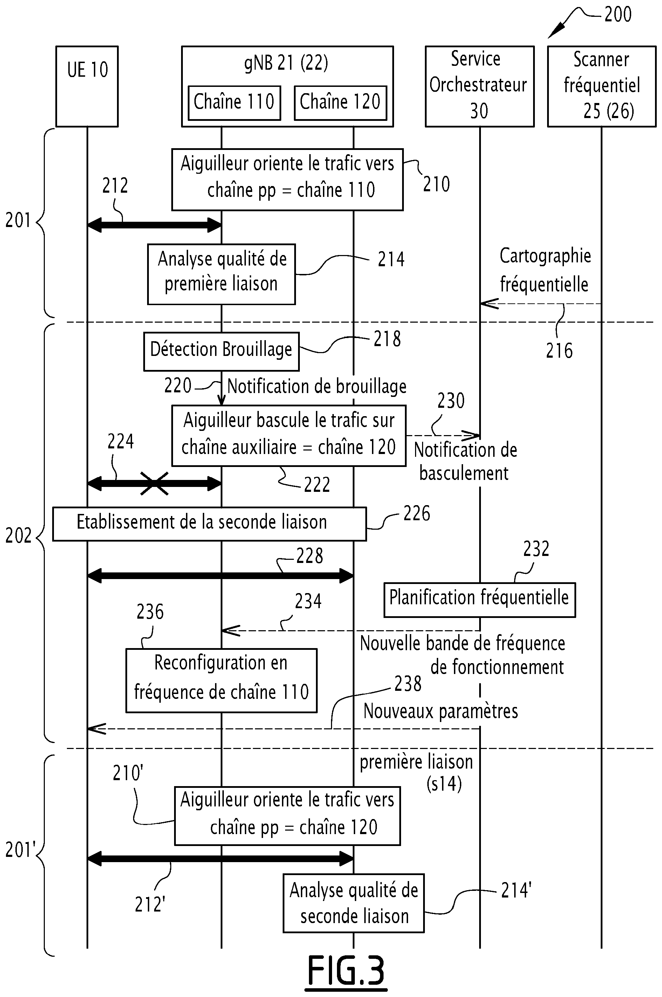

Le procédé selon l'invention va maintenant être décrit en référence à la figure 3, qui illustre la séquence des étapes mises en œuvre par les différentes entités de l'infrastructure 2 décrite précédemment.

La phase 201 du procédé 200 correspond à un fonctionnement nominal de l'infrastructure 2. Par exemple, la première chaîne radio 110 est la chaîne radio principale, tandis que la seconde chaîne radio 120 est la chaîne radio auxiliaire. La première chaîne radio 110 est configurée pour fonctionner dans une première bande de fréquence F1, tandis que la seconde chaîne radio 120 est configurée pour fonctionner dans une seconde bande de fréquence F2.

Ainsi, à tout instant, le module d'aiguillage 102 oriente (étape 210) le trafic descendant à destination du terminal utilisateur - UE 10 vers la première chaîne 110.

La liaison de communication entre le terminal utilisateur 10 et la station de base 21 est une première liaison 212 entre le terminal utilisateur 10 et la première chaîne radio 110.

A tout instant, le module 115 analyse (étape 214) la qualité de la première liaison 212 afin de détecter un évènement de parasitage de la première bande de fréquence F1.

En parallèle, à l'étape 216, le scanner 25 associé à la station de base 21 transmet des cartographies CL indiquant les bandes du spectre qui sont libres ou peu utilisées.

Puis, l'infrastructure bascule du mode de fonctionnement nominal, dans un mode de fonctionnement parasité (phase 202), au moment où le module d'analyse 115 détecte (étape 218) effectivement un parasitage dans la première bande de fréquence F1.

A l'étape 220, le module de brouillage 115 de la première chaîne 110 émet alors une notification de parasitage NP à destination du module d'aiguillage 102.

À l'étape 222, lors de la réception de la notification de parasitage NP, le module d'aiguillage 102 réoriente immédiatement le trafic descendant sur la seconde chaîne radio 120 qui était jusqu'à présent la chaîne auxiliaire. La seconde chaîne radio 120 est alors promue chaîne principale tandis que la première chaîne radio 110, qui était jusqu'à présent la chaîne principale, est dégradée et devient chaîne auxiliaire.

La première chaîne radio 110 est de préférence éteinte de sorte que, à l'étape 224, la première liaison 212 est interrompue.

A l'étape 226, le terminal utilisateur 10, constatant que la première liaison 212 a disparu, lit les informations relatives au paramétrage de la seconde chaîne radio 120 qu'il a mémorisées. En particulier, est indiqué la seconde bande de fréquence F2 sur laquelle établir la seconde liaison, de sorte que le terminal utilisateur n'a pas à scanner l'intégralité du spectre à la recherche d'une bande de fréquence.

Le terminal utilisateur 10 ajuste la fréquence de fonctionnement de son module d'émission/réception pour opérer dans la second bande de fréquence F2, de sorte qu'une seconde liaison 228 peut être établie quasiment immédiatement avec la seconde chaîne radio 212 de manière à poursuivre la communication en cours avec la station de base 21. La communication qui était en cours sur la première liaison 212 se poursuit donc, quasiment sans coupure, sur la seconde liaison 228.

A l'étape 222, le module d'aiguillage 102, après avoir réorienté le trafic en basculant d'une chaîne à l'autre, émet (étape 230) une notification de basculement NB vers le serveur d'orchestration 30.

A l'étape 232, le serveur d'orchestration 30, sur réception de la notification de basculement NB, exécute le module de planification fréquentielle dans le but de sélectionner, dans le spectre, une nouvelle bande de fréquence F1' permettant une reconfiguration de la première chaîne parasitée.

Le module de planification fréquentielle utilise la dernière cartographie CL transmise à l'étape 216 par le scanner fréquentiel 25 associé à la station de base 21.

À l'étape 234, le service orchestrateur 30 transmet un message de configuration MC à la station de base 21. Ce message de configuration indique la nouvelle bande de fréquence F1' que la première chaîne radio 110 doit dorénavant utiliser.

À l'étape 236, lors de la réception du message de configuration MC, la station de base 21 configure la première chaîne radio 110 avec les informations contenues dans le message MC.

Par ailleurs, à l'étape 238, le module de provisionnement 34 du serveur d'orchestration 30 émet un message de provisionnement MP sur l'interface S14 vers le terminal utilisateur 10. Les informations contenues dans le message MP sont mémorisées par le terminal 10. En particulier, est mémorisée la nouvelle bande de fréquence F1' de fonctionnement de la première chaîne radio 110.

La phase de reconfiguration 202 s'achève alors et l'infrastructure repasse dans un mode de fonctionnement nominal 201', dans lequel la seconde chaîne radio 120 est utilisée comme chaîne principale pour supporter la communication en cours avec le terminal utilisateur 10, et la première chaîne est utilisée comme chaîne auxiliaire prête à prendre le relai en cas de brouillage de la chaîne principale.

### Variantes et avantages

Dans le mode de fonctionnement nominal, l'intégralité du trafic est acheminé via la chaîne principale. En variante, une ségrégation du trafic est envisageable, seul le trafic prioritaire étant acheminé via la chaîne principale et le trafic non prioritaire (ou associé à des tranches (« slices » en anglais) de priorité plus faible est acheminé via la chaîne auxiliaire.

En variante, au lieu d'utiliser un scanner de fréquence, ce sont les mesures collectées par les différents terminaux utilisateurs connectés à la station de base considérée, qui permettent de connaître la situation de l'environnement électromagnétique. En effet, un terminal utilisateur a la capacité de scanner tout ou partie du spectre et de transmettre les mesures effectuées à la station de base.

En variante, l'invention s'applique au cas prévu par le mécanisme de double connectivité - DC, à savoir la mise en œuvre de deux stations de base distinctes, une station maître (comportant la première chaîne radio) et une station secondaire (comportant la seconde chaîne radio). La présente invention peut ainsi constituer une amélioration à une architecture mettant en œuvre le mécanisme de double connectivité - DC.

Si dans le mode de réalisation présenté en détail ci-dessus, l'aiguilleur de trafic est situé au niveau de la station de base, en variante, il est déporté dans le réseau, par exemple dans le cœur réseau comme le prévoit une implémentation possible du mécanisme de double connectivité - DC selon le standard du 3GPP.

Dans une implémentation simplifiée, au lieu d'un serveur d'orchestration, un superviseur (« Scheduler » en anglais) est utilisé, de préférence implanté dans la station de base qu'il permet de reconfigurer.

Ainsi, l'invention permet, dans un environnement électromagnétique fortement perturbé, d'assurer la continuité des services en cours.

## Revendications

1. Procédé (200) de reconfiguration d'une infrastructure de radiocommunication (2) en cas de parasitage, l'infrastructure de radiocommunication comportant un terminal utilisateur (10) et un réseau de radiocommunication (20), le réseau de radiocommunication comportant une station de base (22) comportant première chaîne radio (110) pour établir une première liaison de communication avec le terminal utilisateur dans une première bande de fréquence, et une seconde chaîne radio (120) pour établir une seconde liaison de communication avec le terminal utilisateur dans une seconde bande de fréquence, différente de la première bande de fréquence, le réseau de radiocommunication comportant, en outre, un module d'aiguillage (102) capable d'orienter le trafic d'une communication en cours avec le terminal utilisateur soit vers la première chaîne radio soit vers la seconde chaîne radio, comportant les étapes de :
- alors qu'une première liaison entre le terminal utilisateur et la première chaîne radio est établie, analyser (214) une qualité de la première liaison par la station de base ;
- en cas de dégradation de la qualité de la première liaison, dégradation indicative d'un parasitage sur la première bande de fréquence, émettre (220) une notification de parasitage à destination du module d'aiguillage ;
lors de la réception de la notification de parasitage,
- orienter (222), par le module d'aiguillage, le trafic de la communication en cours avec le terminal utilisateur de la première chaîne radio vers la seconde chaîne radio ; et
- établir (226) une seconde liaison entre le terminal utilisateur et la seconde chaîne radio de la station de base ; **caractérisé en ce que** le procédé comporte les étapes de :
- transmettre (230), par le module d'aiguillage, une notification de basculement à un serveur d'orchestration (30) connecté au réseau de radiocommunication lors de la réception de la notification de basculement,
- sélectionner (232), par le serveur d'orchestration, une nouvelle bande de fréquence en tant que première bande de fréquence et commander (236) une reconfiguration de la première chaîne radio pour qu'elle fonctionne dans la nouvelle bande de fréquence sélectionnée ; et,
- provisionner (238) le terminal utilisateur avec des informations relatives à la nouvelle bande de fréquence sélectionnée pour la première chaîne radio.

2. Procédé selon la revendication 1, dans lequel, le réseau de radiocommunication (20) comportant une station de base (21), la station de base regroupe les première et seconde chaînes radio (110, 120).

3. Procédé selon la revendication 1 ou la revendication 2, dans lequel chaque chaîne radio parmi les première et seconde chaînes radio (110, 120) comporte, un bloc protocole de convergence de paquets de données - PDCP (100), un bloc de contrôle du lien radio - RLC (112, 122), un bloc de contrôle d'accès au media - MAC (114, 124) et un bloc d'accès à la couche physique - PHY (116, 126), le bloc PDCP pouvant être commun aux première et seconde chaînes radio.

4. Procédé selon la revendication 3, dans lequel le module d'aiguillage (102) est intégré au bloc PDCP (100).

5. Procédé selon la revendication 3 ou la revendication 4, dans lequel le bloc MAC de chaque chaîne radio parmi les première et seconde chaînes radio (110, 120) comporte un module d'analyse (115, 125) de la qualité de la liaison en cours entre la chaîne radio et le terminal utilisateur.

6. Procédé selon l'une quelconque des revendications 1 à 5, dans lequel le serveur d'orchestration (30) prend en compte une cartographie (CL) des bandes de fréquence libres à l'instant courant pour sélectionner une nouvelle bande de fréquence lors de la réception d'une notification de basculement.

7. Procédé selon la revendication 6, dans lequel une cartographie (CL) est déterminée par un scanner de fréquence (25, 26), de préférence associé aux première et second chaînes radio.

8. Procédé selon l'une quelconque des revendications 1 à 7, dans lequel le serveur d'orchestration (30), pour sélectionner une nouvelle bande de fréquence lors de la réception d'une notification de basculement, prend en compte des critères supplémentaires parmi la qualité de service et une bande de fréquence utilisée à l'instant courant par des stations de base du réseau de radiocommunication.

9. Infrastructure de radiocommunication (2) comportant un terminal utilisateur (10), un réseau de radiocommunication (20), et un serveur d'orchestration (30) connecté au réseau de radiocommunication, le réseau de radiocommunication comportant une première chaîne radio (110) capable d'établir une première liaison de communication avec le terminal utilisateur dans une première bande de fréquence, et une seconde chaîne radio (120) capable d'établir une liaison de communication avec le terminal utilisateur dans une seconde bande de fréquence, qui est différente de la première bande de fréquence, le réseau de radiocommunication comportant, en outre, un module d'aiguillage (102) capable d'orienter le trafic de la communication en cours avec le terminal utilisateur vers une chaîne parmi les première et seconde chaînes radio, un module d'analyse (115, 125) capable d'analyser la qualité de la liaison en cours avec le terminal mobile, l'infrastructure de radiocommunication étant adaptée pour mettre en œuvre un procédé (200) de reconfiguration en cas de détection d'un parasitage selon l'une quelconque des revendications 1 à 8.

## Patentansprüche

1. Verfahren (200) zum Rekonfigurieren einer Funkkommunikationsinfrastruktur (2) im Fall einer Funkstörung, die Funkkommunikationsinfrastruktur umfassend ein Benutzerendgerät (10) und ein Funkkommunikationsnetz (20), das Funkkommunikationsnetz umfassend eine Basisstation (22), umfassend einen ersten Funkkanal (110) zum Herstellen einer ersten Kommunikationsverbindung mit dem Benutzerendgerät in einem ersten Frequenzband, und einen zweiten Funkkanal (120) zum Herstellen einer zweiten Kommunikationsverbindung mit dem Benutzerendgerät in einem zweiten Frequenzband, das sich von dem ersten Frequenzband unterscheidet,
das Funkkommunikationsnetz ferner umfassend ein Weichenmodul (102), das in der Lage ist, den Verkehr einer laufenden Kommunikation mit dem Benutzerendgerät entweder auf den ersten Funkkanal oder auf den zweiten Funkkanal zu lenken, umfassend die folgenden Schritte:
- während eine erste Verbindung zwischen dem Benutzerendgerät und dem ersten Funkkanal hergestellt wird, Analysieren (214) einer Qualität der ersten Verbindung durch die Basisstation;
- im Fall einer Verschlechterung der Qualität der ersten Verbindung, die indikativ für eine Funkstörung auf dem ersten Frequenzband ist, Emittieren (220) einer Funkstörungsmeldung an das Weichenmodul;
bei Empfang der Funkstörungsmeldung,
- Lenken (222), durch das Weichenmodul, des Verkehrs der laufenden Kommunikation mit dem Benutzerendgerät von dem ersten Funkkanal zu dem zweiten Funkkanal; und
- herstellen (226) einer zweiten Verbindung zwischen dem Benutzerendgerät und dem zweiten Funkkanal der Basisstation;
- **dadurch gekennzeichnet, dass** das Verfahren die folgenden Schritte umfasst:
- Übertragen (230), durch das Weichenmodul, einer Umschaltmeldung an einen Orchestrierungsserver(30), der mit dem Funkkommunikationsnetz verbunden ist, bei Empfang der Umschaltmeldung,
- Auswählen (232), durch den Orchestrierungsserver, eines neuen Frequenzbands als das erste Frequenzband und Steuern (236) einer Rekonfiguration des ersten Funkkanals, damit er in dem ausgewählten neuen Frequenzband funktioniert; und
- Bereitstellen (238) von Informationen an das Benutzerendgerät in Bezug auf das neue Frequenzband, das für den ersten Funkkanal ausgewählt wird.

2. Verfahren nach Anspruch 1, wobei das Funkkommunikationsnetz (20) eine Basisstation (21) umfasst, wobei die Basisstation den ersten und den zweiten Funkkanal (110, 120) zusammenfasst.

3. Verfahren nach Anspruch 1 oder Anspruch 2, wobei jeder Funkkanal von dem ersten und dem zweiten Funkkanal (110, 120) einen Block von Packet Data Convergence Protocol, PDCP, (100), einen Block von Radio Link Control, RLC, (112, 122), einen Block von Media Access Control, MAC, (114, 124) und einen Zugangsblock zu der Physical Layer, PHY, (116, 126) umfasst, wobei der PDCP-Block von dem ersten und dem zweiten Funkkanal geteilt werden kann.

4. Verfahren nach Anspruch 3, wobei das Weichenmodul (102) in den PDCP-Block (100) integriert ist.

5. Verfahren nach Anspruch 3 oder Anspruch 4, wobei der MAC-Block von jedem Funkkanal aus dem ersten und dem zweiten Funkkanal (110, 120) ein Analysemodul (115, 125) der Qualität der aktuellen Verbindung zwischen dem Funkkanal und dem Benutzerendgerät umfasst.

6. Verfahren nach einem der Ansprüche 1 bis 5, wobei der Orchestrierungsserver (30) eine Kartografie (CL) der freien Frequenzbänder zum aktuellen Zeitpunkt berücksichtigt, um bei Empfang einer Umschaltmeldung ein neues Frequenzband auszuwählen.

7. Verfahren nach Anspruch 6, wobei eine Kartografie (CL) durch einen Frequenzscanner (25, 26) bestimmt wird, der vorzugsweise mit dem ersten und zweiten Funkkanal assoziiert ist.

8. Verfahren nach einem der Ansprüche 1 bis 7, wobei der Orchestrierungsserver (30) zum Auswählen eines neuen Frequenzbands bei Empfang einer Umschaltmeldung zusätzliche Kriterien aus Dienstqualität und einem Frequenzband, das zu dem aktuellen Zeitpunkt von Basisstationen des Funkkommunikationsnetzes verwendet wird, berücksichtigt.

9. Funkkommunikationsinfrastruktur (2), umfassend ein Benutzerendgerät (10), ein Funkkommunikationsnetz (20) und einen Orchestrierungsserver (30), der mit dem Funkkommunikationsnetz verbunden ist, das Funkkommunikationsnetz umfassend einen ersten Funkkanal (110), der in der Lage ist, eine erste Kommunikationsverbindung mit dem Benutzerendgerät in einem ersten Frequenzband herzustellen, und einen zweiten Funkkanal (120), der in der Lage ist, eine Kommunikationsverbindung mit dem Benutzerendgerät in einem zweiten Frequenzband herzustellen, das sich vom ersten Frequenzband unterscheidet, das Funkkommunikationsnetz ferner umfassend ein Weichenmodul (102), das in der Lage ist, den Verkehr der laufenden Kommunikation mit dem Benutzerendgerät auf einen von dem ersten und dem zweiten Funkkanal zu lenken, ein Analysemodul (115, 125), das in der Lage ist, die Qualität der aktuellen Verbindung mit dem mobilen Endgerät zu analysieren, wobei die Funkkommunikationsinfrastruktur angepasst ist, um ein Verfahren (200) zur Rekonfiguration durchzuführen, wenn eine Funkstörung nach einem der Ansprüche 1 bis 8 erkannt wird.

## Claims

1. A method (200) for reconfiguring a radiocommunication infrastructure (2) in case of interference, the radiocommunication infrastructure comprising a user terminal (10) and a radiocommunication network (20), the radiocommunication network comprising a base station (22) comprising a first radio channel (110) for establishing a first communication link with the user terminal in a first frequency band, and a second radio channel (120) for establishing a second communication link with the user terminal in a second frequency band, different from the first frequency band, the radiocommunication network further comprising a routing module (102) capable of directing the traffic of a communication in progress with the user terminal either to the first radio channel or to the second radio channel, comprising the steps of:
- while a first link between the user terminal and the first radio channel is established, analyzing (214) a quality of the first link by the base station;
- in the event of degradation of the quality of the first link, degradation indicative of interference on the first frequency band, transmitting (220) an interference notification intended for the routing module;
upon receipt of the interference notification,
- directing (222), by the routing module, the traffic of the communication in progress with the user terminal of the first radio channel toward the second radio channel; and
- establishing (226) a second link between the user terminal and the second radio channel of the base station;
**characterized in that** the method comprises the following steps:
- transmitting (230), via the routing module, a handover notification to an orchestration server (30) connected to the radiocommunication network;
when receiving the handover notification,
- selecting (232), via the orchestration server, a new frequency band as first frequency band and ordering (236) reconfiguring of the first radio channel so that it operates in the new selected frequency band; and,
- providing (238) the user terminal with information relating to the new frequency band selected for the first radio channel.

2. The method according to claim 1, wherein, the radiocommunication network (20) comprising a base station (21), the base station groups together the first and second radio channels (110, 120).

3. The method according to claim 1 or claim 2, wherein each radio channel among the first and second radio channels (110, 120) comprises a packet data convergence protocol, PDCP, block (100), a radio link control, RLC, block (112, 122), a media access control, MAC, block (114, 124) and a physical layer, PHY, access block (116, 126), the PDCP block possibly being common to the first and second radio channels.

4. The method according to claim 3, wherein the routing module (102) is integrated into the PDCP block (100).

5. The method according to claim 3 or claim 4, wherein the MAC block of each radio channel among the first and second radio channels (110, 120) comprises a module (115, 125) for analyzing the quality of the current link between the radio channel and the user terminal.

6. The method according to any one of claims 1 to 5, wherein the orchestration server (30) takes account of a mapping (CL) of the free frequency bands at the current instant to select a new frequency band when receiving a handover notification.

7. The method according to claim 6, wherein a mapping (CL) is determined by a frequency scanner (25, 26), preferably associated with the first and second radio channels.

8. The method according to any one of claims 1 to 7, wherein the orchestration server (30), to select a new frequency band upon receipt of a handover notification, takes into account additional criteria among the quality of service and a frequency band used at the current time by base stations of the radiocommunication network.

9. A radiocommunication infrastructure (2) comprising a user terminal (10), a radiocommunication network (20), and an orchestration server (30) connected to the radiocommunication network, the radiocommunication network comprising a first radio channel (110) for establishing a first communication link with the user terminal in a first frequency band, and a second radio channel (120) for establishing a communication link with the user terminal in a second frequency band, different from the first frequency band, the radiocommunication network further comprising a routing module (102) capable of directing the traffic of the communication in progress with the user terminal toward a channel among the first and second radio channels, a module (115, 125) for analyzing the quality of the current link with the mobile terminal, the radiocommunication infrastructure being adapted to implement a reconfiguration method (200) in the event of detection of interference according to any one of claims 1 to 8.
